# EUROPÄISCHE PATENTSCHRIFT

(11) **EP 1 734 633 B1**
(45) Veröffentlichungstag und Bekanntmachung des Hinweises auf die Patenterteilung: **30.11.2011**
(21) Anmeldenummer: 06010240.7
(22) Anmeldetag: 18.05.2006
(51) Int. Cl.: H02J 7/00, B60L 11/18

(54) **Kabel für Daten und Leistungübertragung zur Verbindung von Batterie und Ladegerät**
Cable for data and power transfer used for connecting a battery and a charger
Câble capable du transmission de données et de puissance pour la connexion d'une batterie avec un chargeur

(30) Priorität: 15.06.2005 DE 102005027508
(43) Veröffentlichungstag der Anmeldung: 20.12.2006
(73) Patentinhaber: Jungheinrich Aktiengesellschaft, 22047 Hamburg (DE)
(72) Erfinder: von Berg, Kai, Dipl.-Ing., 24539 Neumünster (DE)
(74) Vertreter: Hauck Patent- und Rechtsanwälte

(56) Entgegenhaltungen:
- JP-A- 2003 045 582
- US-A1- 2004 100 225
- US-A1- 2005 017 679
- US-B1- 6 456 036

## Beschreibung

Die Erfindung bezieht sich auf eine Anordnung aus Batterie- und Ladegerät für ein Flurförderzeug nach dem Oberbegriff des Patentanspruchs 1.

Die Batterien von batteriebetriebenen Flurförderzeugen müssen nach Gebrauch wieder aufgeladen werden. Zu diesem Zweck sind entsprechende Ladegeräte vorzusehen. Es ist bekannt, Ladegeräte an Bord von Flurförderzeugen mitzuführen. Die Ladegeräte weisen ein Ladekabel auf, das in geeigneter Weise untergebracht ist und im Bedarfsfall herausgezogen werden kann zwecks Verbindung mit einer Netzsteckdose. Da von Zeit zu Zeit die Batterie entnommen werden muß, ist zwischen Batterie und Ladegerät eine weitere Leitung mit einer Steckverbindung vorgesehen, die gelöst werden muß, um die Batterie ohne Aufwand aus dem Flurförderzeug herauszunehmen.

Es ist ebenso bekannt, die Ladegeräte stationär an bestimmten Ladestationen unterzubringen und das Fahrzeug entweder zur Ladestation zu fahren oder die Batterie aus dem Flurförderzeug zu entnehmen und in die Ladestation zu bringen. Auch in diesen Fällen hat das Ladegerät ein mit der Steckdose zu verbindendes Ladekabel sowie ein Kabel, dass die Verbindung zwischen dem Ladegerät und der Batterie herstellt.

Es ist ferner bekannt, in der Batterie und/oder dem Ladegerät eine digitale Vorrichtung zu installieren, die Daten abspeichert, auswertet oder die Gerätefunktionen steuert. Für diese Vorrichtungen muß ein Datentransfer von außen nach innen und umgekehrt stattfinden.

Aus WO 00/37978 ist eine Kombination aus einer Unterputzsteckdose und einem Datenkonverter und/oder Datenrepeater mit einem Datenanschluß für einen Datenausgang bekannt. Die Netzsteckdose ist über eine Steckverbindung mit einem Netzgerät in der Steckdose verbunden. Netzsteckdose und Datenanschluß sind nebeneinander angeordnet und mit dem Datenkonverter und/oder Datenrepeater zu einer Baueinheit verbunden.

Aus US 6,445,188 B1 ist ein Stecker bekannt geworden zur Verbindung mit einer Netzsteckdose, in dem außerdem Anschlüsse vorgesehen sind, die zur gleichen Seite weisen wie die Steckkontakte des Steckers und die mit einer Leiterplatte im Innern des Steckergehäuses verbunden sind. Die Leiterplatte ermöglicht zum Beispiel die Realisierung eines Strom- und Spannungsmessers zwecks Messung der Leistung, die über den Stecker zu einem Verbraucher transportiert wird.

Aus US 6,533,466 B1 ist ein Hybridstecker bekannt geworden zur Verbindung mit einem Gerät, wobei der Stecker einen optischen und elektrische Steckabschnitte aufweist, die gemeinsam in einen Steckanschluß eines Gerätes einsteckbar sind. Das mit dem Stecker verbundene Kabel weist sowohl elektrische Leitung als auch einen optischen Leiter auf.

Aus JP 2003045582 A ist bekannt geworden, einen Steckanschluß so auszubilden, dass neben einem Leistungssteckanschluß ein Steckanschluß für einen USB-Stecker vorgesehen ist.

Aus JP 05290932 A ist bekannt geworden, im Stecker einer Netzversorgung für einen elektrischen Verbraucher eine Anzeigevorrichtung vorzusehen, die feststellt, wenn die Verbindung zum Netz unterbrochen ist.

Aus US 2004/0100225 A1 ist bekannt geworden, zwischen dem Ladegerät und der Batterie eine Steckverbindung vorzusehen und in dem ladegerätseitigen Stecker einen zusätzlichen Anschluss für ein Steuergerät vorzusehen. Das Steuergerät steuert den Betrieb eines Ventilators während der Aufladung der Batterie.

Der Erfindung liegt die Aufgabe zugrunde, eine Anordnung aus Batterie- und Ladegerät zu schaffen, bei der ein Datentransfer auf einfache Weise so erfolgen kann, dass Änderungen am Gehäuse für das Ladegerät und/oder die Batterie nicht vorgesehen werden müssen.

Diese Aufgabe wird durch die Merkmale des Patentanspruchs 1 gelöst.

Bei der erfindungsgemäßen Anordnung weist das Ladekabel eine mit der digitalen Vorrichtung verbundene Datenleitung auf. Im Stecker des Ladekabels, das heißt in seiner Isolation bzw. seinem Gehäuse ist eine von außen mit der Datenleitung verbundener Steckanschluß vorgesehen, der eine Schnittstelle für den Datenaustausch mit der digitalen Vorrichtung bildet.

Das Gehäuse vom Ladegerät muß bestimmten Sicherheitsanforderungen genügen und etwa gegen das Eindringen von Wasser und Staub gesichert sein. Eine Schnittstelle zum Datenaustausch mit der digitalen Vorrichtung am Gehäuse würde unter Umständen die Schutzanforderungen nicht erfüllen. Dadurch, dass bei der Erfindung die Schnittstelle im Stecker ausgebildet ist, ist eine zusätzliche Öffnung im Gehäuse nicht erforderlich. Der Kabelanschluß mit dem Ladegerät ist ohnehin erforderlich und erfüllte die Sicherheitsvorschriften. Die Datenleitung ist innerhalb des Kabels geführt und daher problemlos mit der digitalen Vorrichtung im Innern des Gehäuses verbindbar. Das andere Ende der Datenleitung ist mit dem Stecker verbunden, der zum Beispiel ein Netzstecker ist. Entscheidend ist lediglich, dass der Stecker gegenüber herkömmlichen Steckern so ausgebildet ist, dass er einen von außen zugänglichen Steckanschluß, beispielsweise eine Steckbuchse, aufweist. Der Stecker eines digitalen Gerätes kann daher in den Steckanschluß eingeführt werden, um einen Datenaustausch zwischen dem digitalen Gerät und der digitalen Vorrichtung im Ladegerät zu ermöglichen.

Die Erfindung soll nachfolgend anhand eines von in Zeichnungen dargestellten Ausführungsbeispiels näher beschrieben werden.
- Figur 1.: zeigt schematisch eine Anordnung aus Batterie und Ladegerät für ein Flurförderzeug.
- Figur 2: zeigt ein Kabel nach Figur 1 mit einem Stecker nach der Erfindung.

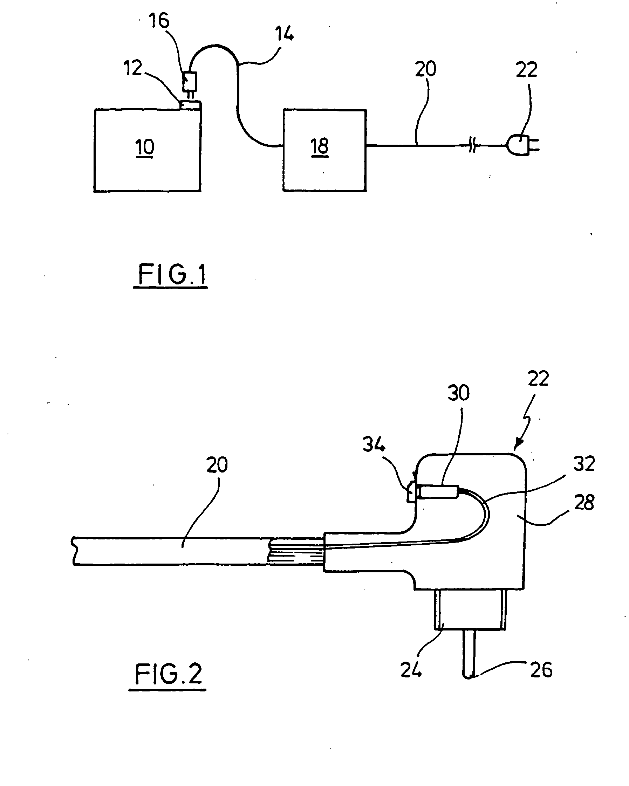

In Figur 1 ist eine Batterie 10 eines nicht weiter dargestellten Flurförderzeugs angedeutet. Die Batterie 10 kann im Flurförderzeug angeordnet oder aus diesem entfernt sein. Die Batterie 10 ist mit einem Steckanschluß 12 für ein Ladekabel 14 versehen, das einen Stecker 16 aufweist. Das Ladekabel 14 ist mit einem Ladegerät 18 verbunden, das an Bord eines Flurförderzeugs installiert oder an einem entfernten Ort stationär angeordnet sein kann. Das Ladegerät 18 ist seinerseits mit einem Ladekabel 20 verbunden, das am Ende einen mit einem Netzstecker 22, beispielsweise einem Schukostecker verbunden ist.

In Figur 2 ist das Kabel 20 angedeutet und der Netzstecker 22 etwas detaillierter dargestellt. Man erkennt zum einen den Schukosteckerabschnitt 24 mit den üblichen Steckerstiften 26. Die Steckerstifte 26 sind in bekannter Weise mit den Leitern im Kabel 20 verbunden. Im Gehäuse 28 des Steckers 22 ist ferner eine Steckbuchse 30 angeordnet. Sie ist mit einer Datenleitung 32 verbunden, die ebenfalls im Kabel 20 geführt ist und mit einem in der digitalen Vorrichtung im Ladegerät 18 verbunden. Die digitale Vorrichtung dient etwa zur Abspeicherung von Daten, Steuerung des Ladegeräts usw.. Die Steckbuchse 30, welche durch eine Abdeckkappe 34 nach außen verschlossen werden kann, ermöglicht über den Anschluß eines digitalen Gerätes den Datenaustausch mit der digitalen Vorrichtung in dem Ladegerät 18. Wie aus Figur 2 zu erkennen, ist die Achse der Steckbuchse 30 parallel zur Achse des Kabels 20 im Bereich der Verbindung mit dem Stecker 22, während die Steckachse für den Schutzkontaktsteckerteil senkrecht dazu angeordnet ist. Dadurch ist zum einen eine gute Zugänglichkeit der Steckbuchse 30 gewährleistet und zum anderen ein gewisser Schutz.

## Patentansprüche

1. Anordnung aus Batterie und Ladegerät für ein Flurförderzeug, wobei ein einen Netzstecker aufweisendes Ladekabel am Ladegerät für die Verbindung mit einer Netzsteckdose vorgesehen ist und das Ladegerät eine digitale Vorrichtung enthält zur Speicherung von Daten, Steuerung von Funktionen usw., **dadurch gekennzeichnet, dass** das Ladekabel (20) eine mit der digitalen Vorrichtung verbundene Datenleitung (32) aufweist und ein mit dem Netzstecker (22) von außen zugänglicher mit der Datenleitung (32) verbundener Steckanschluß (30) vorgesehen ist, der eine Schnittstelle für den Datenaustausch mit der digitalen Vorrichtung bildet.

2. Anordnung nach Anspruch 1, **dadurch gekennzeichnet, dass** der Steckanschluß ein USB-Steckanschluß ist.

3. Anordnung nach Anspruch 1 oder 2, **dadurch gekennzeichnet, dass** der Eingang des Steckanschlusses (30) von einer Abdeckkappe (34) abdeckbar ist.

4. Anordnung nach einem der Ansprüche 1 bis 3, **dadurch gekennzeichnet, dass** der Stecker einen Schutzkontaktsteckabschnitt aufweist.

## Claims

1. An arrangement of a battery and a charger for an industrial truck, wherein a charging cable having a power plug is provided on the charger for connection with a power socket and the charger contains a digital device for saving data, controlling functions, etc. **characterized in that** the charging cable (20) has a data line (32) connected with the digital device and a plug-in connection (30) connected with the data line (32), accessible from the outside with the power plug (22) is provided, which forms an interface for data exchange with the digital device.

2. The arrangement according to claim 1, **characterized in that** the plug-in connection is a USB connection.

3. Arrangement according to claim 1 or 2, **characterized in that** the inlet of the plug-in connection (30) is coverable by a covering cap (34).

4. The arrangement according to one of claims 1 through 3, **characterized in that** the plug has a protective contact plug-in portion.

## Revendications

1. Ensemble formé d'une batterie et d'un chargeur pour un chariot de manutention, un câble de chargement sur le chargeur comprenant une fiche secteur pour la connexion à une prise secteur, et le chargeur contient un dispositif numérique pour le stockage de données, la commande de fonctions, etc., **caractérisé en ce que** le câble de chargement (20) présente une ligne de transmission de données (32) reliée au dispositif numérique, et une prise de courant embrochable (30) accessible de l'extérieur avec la fiche secteur (22) et reliée à la ligne de transmission de données (32) est prévue, laquelle forme une interface pour l'échange de données avec le dispositif numérique.

2. Ensemble selon la revendication 1, **caractérisé en ce que** la prise de courant embrochable est une prise de courant USB.

3. Ensemble selon les revendications 1 ou 2, **caractérisé en ce que** l'entrée de la prise de courant embrochable (30) peut être recouverte d'un capuchon (34).

4. Ensemble selon une des revendications 1 à 3, **caractérisé en ce que** le connecteur présente une section de prise de courant de sécurité.
